# EUROPÄISCHE PATENTSCHRIFT

(11) **EP 1 570 338 B1**
(45) Veröffentlichungstag und Bekanntmachung des Hinweises auf die Patenterteilung: **19.07.2017**
(21) Anmeldenummer: 03758076.8
(22) Anmeldetag: 28.10.2003
(51) Int. Cl.: G06F 3/12

(54) **EINFACHES EINSTELLEN VON DRUCKBILD- UND MASCHINENPARAMETERN EINES ELEKTROFOTOGRAFISCHEN DRUCKERS ODER KOPIERERS**
SIMPLE ADJUSTMENT OF PRINTING IMAGE AND MACHINE PARAMETERS FOR AN ELECTROPHOTOGRAPHIC PRINTER OR COPIER
RÈGLAGE SIMPLE DE PARAMÈTRES D'IMAGES IMPRIMÉES ET DE MACHINE POUR UNE IMPRIMANTE OU UN COPIEUR ÉLECTROPHOTOGRAPHIQUE

(30) Priorität: 28.10.2002 DE 10250182
(43) Veröffentlichungstag der Anmeldung: 07.09.2005
(73) Patentinhaber: Océ Printing Systems GmbH & Co. KG, 85586 Poing (DE)
(72) Erfinder: BARDOLATZY, Ulrich, 85586 Poing (DE); ÖLMEZ, Nejmi, 80993 München (DE); FLEXEDER, Michael, 85586 Poing (DE)
(74) Vertreter: Schaumburg und Partner Patentanwälte mbB
(86) Internationale Anmeldenummer: PCT/EP2003/011960
(87) Internationale Veröffentlichungsnummer: WO 2004/038579

(56) Entgegenhaltungen:
- EP-A- 1 072 969
- WO-A2-01/71478
- DE-A- 19 836 745

## Beschreibung

Die Erfindung betrifft eine Bedieneinheit für mindestens ein elektrofotografisches Druck- oder Kopiersystem. Die Bedieneinheit hat eine Anzeigeeinheit, bei der eine grafische Benutzeroberfläche angezeigt wird. Die grafische Benutzeroberfläche enthält eine grafische Darstellung mindestens eines Einstellwerts einer ersten Druckeinheit. Ferner betrifft die Erfindung eine grafische Benutzeroberfläche sowie ein Verfahren zum Bedienen mindestens eines elektrofotografischen Druck- oder Kopiersystems.

Bei bekannten Druck- oder Kopiersystemen haben in einer sogenannten Druck- oder Kopierstraße einzelne Geräte, wie Drucker und verschiedene Vor- und Nachverarbeitungs-Einheiten, jeweils ein Bedienfeld, dessen Bedienoberfläche bei der Konfiguration des jeweiligen Gerätes genau für dieses Gerät eingerichtet wird. Weiterhin sind Druck- und Kopiersysteme bekannt, bei denen ein gemeinsames Bedienfeld für eine Einzugseinheit und eine Druckeinheit vorgesehen ist. Das Bedienfeld wurde mit Hilfe einer speziellen Software betrieben, die eine gemeinsame Bedienoberfläche für die Einzugseinheit und die Druckeinheit bereitstellt.

Ferner sind Drucksysteme bekannt, bei denen zwei separate Drucker so miteinander gekoppelt werden, daß mit Hilfe des ersten Druckers die Papiervorderseite und mit Hilfe des zweiten Druckers die Papierrückseite bedruckt werden kann. Mit solchen gekoppelten Druckern ist es auch möglich, anstatt der Vorder- und Rückseite des Papiers, d.h. anstatt eines Duplex-Drucks auf der Vorderseite des Papiers mit Hilfe des ersten Druckers ein Druckbild in einer ersten Farbe und mit Hilfe des zweiten Druckers ein Druckbild in einer zweiten Farbe über das erste Druckbild zu drucken. Ein solcher Zweifarben-Druck wird auch als Spot-Color-Druck bezeichnet. Es sind jedoch auch Drucksysteme mit mehr als zwei Druckern, z.B. mit drei oder vier Druckern bekannt. Bei diesen Drucksystemen müssen die Parameter des jeweiligen Druckers an der Bedieneinheit des jeweiligen Druckers eingestellt werden. Bei einer Änderung von Parametern des zu bedruckenden Papiers müssen somit Änderungen an allen Bedieneinheiten der im Drucksystem vorhandenen Drucker durchgeführt werden. Drucksysteme mit zwei Drukkern werden auch als Twin-Systeme und Drucksysteme mit drei Druckern als Triplex-Systeme bezeichnet.

Aus dem Dokument US 5,105,220 A ist eine Bedieneinheit mit einem tastsensitiven Bildschirm bekannt. Mit Hilfe einer Anzeige auf der Bedieneinheit wird eine Bedienperson mit Hilfe der Anzeige einer Abbildung einer Hand, die auf eine dargestellte Schaltfläche zeigt, auf die Bedienung mit Hilfe des tastsensitiven Bildschirms hingewiesen.

Aus dem Dokument DE 196 11 645 A1 ist ein Einricht-Navigationssystem zum Programmieren von Reproduktionsrichtungen bekannt. Mit Hilfe einer Vorrichtung kann die Reproduktionsvorrichtung derart programmiert werden, dass sie einen Kopierauftrag entsprechend vorbestimmten Betriebsparametern ausführt. Die Programmiervorrichtung enthält eine Benutzeroberfläche, die jeweils aus einer Vielzahl von auf einer Standardbetriebsfunktions-Ebene, einer auftragsbezogenen Ebene und einer seitenbezogenen Ebene vorhandenen Anzeigebildschirm jeweils einzelne Bildschirme anzeigt.

Aus dem Dokument DE 43 23 454 A1 ist ein Bedientafel-Anzeigeverfahren für ein Kopiergerät bekannt. Die Bedientafel enthält ein tastsensitives LCD-Anzeigefeld mit Hilfe dieses Anzeigefelds lassen sich verschiedene Bedienoberflächen zum Bedienen des Kopiergeräts einstellen.

Aus dem Dokument US 5 444 517 A ist eine Bedienoberfläche einer Bedieneinheit eines Kopierers bekannt, mit der der Schwärzungsgrad von erzeugten Kopien einstellbar ist.

Aus dem Dokument DE 198 36 745 A1 ist ein Drucksystem mit zwei im Tandembetrieb arbeitenden Druckern bekannt, bei dem Steuerdaten zwischen einer Bedieneinheit des ersten Druckers und einer Bedieneinheit des zweiten Druckers übertragbar sind. Ferner sind eine Steuereinheit des ersten Druckers mit einer Steuereinheit des zweiten Druckers über eine Datenleitung miteinander verbunden. Geänderte Einstellwerte können mit Hilfe der Datenleitung zur jeweils anderen Steuereinheit übertragen werden.

Aus dem Dokument EP 1 072 969 A2 ist ein Druck- und Kopiersystem mit einer Anzeigevorrichtung bekannt, die eine Benutzeroberfläche ausgibt. Mit Hilfe dieser Benutzeroberfläche können Einstellungen des Druck- oder Kopiersystems durchgeführt werden.

Es ist Aufgabe der Erfindung, eine Bedieneinheit für mindestens ein elektrofotografisches Druck- oder Kopiersystem anzugeben, durch die ein einfaches Einstellen von Parametern einfach und übersichtlich möglich ist und Fehler vermieden werden. Ferner ist eine grafische Benutzeroberfläche und ein Verfahren zum Bedienen mindestens eines elektrofotografischen Druck- oder Kopiersystems mit mindestens zwei Druckeinheiten anzugeben.

Die Aufgabe wird für eine Bedieneinheit für mindestens ein elektrofotografisches Druck- oder Kopiersystem mit den Merkmalen des Patentanspruchs 1 gelöst. Vorteilhafte Weiterbildungen sind in den abhängigen Patentansprüchen angegeben.

Durch eine Bedieneinheit mit den Merkmalen des Patentanspruchs 1 wird erreicht, dass der Einstellwert auf einfache Art und Weise mit Hilfe der grafischen Benutzeroberfläche ausgegeben wird, wodurch eine Bedienperson in übersichtlicher Art und Weise über den aktuellen Betrag des Einstellwerts informiert wird. Weiterhin kann die Bedienperson den Betrag des Einstellwertes mit Hilfe der grafischen Benutzeroberfläche eingeben bzw. ändern, wodurch eine einfache Handhabung der Einstellwerte des Druck- oder Kopiersystems möglich ist.

Ein zweiter Aspekt der Erfindung betrifft eine grafische Benutzeroberfläche zum Bedienen eines elektrofotografischen Druck- oder Kopiersystems. Mit Hilfe der grafischen Benutzeroberfläche erfolgt eine grafische Darstellung mindestens eines Einstellwertes eines Druckbild- oder Maschinenparameters einer Druckeinheit des Druck- oder Kopiersystems. Der Betrag des Einstellwertes ist mit Hilfe der Benutzeroberfläche eingebbar.

Dadurch wird erreicht, dass eine einfache Bedienung des Druck- oder Kopiersystems mit Hilfe der grafischen Benutzeroberfläche möglich ist. Insbesondere ist eine übersichtliche und prägnante grafische Darstellung des aktuellen Betrags des Einstellwertes möglich. Ferner kann eine Bedienperson den aktuellen Betrag auf einfache Art und Weise mit Hilfe der grafischen Benutzeroberfläche ändern.

Ein dritter Aspekt der Erfindung betrifft ein Verfahren zum Bedienen eines elektrofotografischen Druck- oder Kopiersystems. Durch eine grafische Benutzeroberfläche wird mit Hilfe einer grafischen Darstellung mindestens ein Einstellwert eines Druckbild- oder Maschinenparameters einer Druckeinheit des Druck- oder Kopiersystems angezeigt. Der Betrag des Einstellwerts wird zum Ändern des aktuellen Betrags des Einstellwerts durch eine Benutzereingabe über die Benutzeroberfläche eingegeben.

Durch dieses Verfahren wird erreicht, dass der Betrag des Einstellwerts auf einfache Art und Weise darstellbar ist und dass zum Ändern des Einstellwerts ein neuer Betrag des Einstellwerts mit Hilfe der grafischen Benutzeroberfläche auf einfache Art und Weise eingebbar ist. Die Bedienung des Druck- oder Kopiersystems ist dadurch für eine Bedienperson stark vereinfacht.

Ein vierter Aspekt der Erfindung betrifft eine Bedieneinheit für mindestens ein elektrofotografisches Druck- oder Kopiersystem. Die Bedieneinheit enthält eine Anzeigeeinheit, auf der eine grafische Benutzeroberfläche angezeigt wird, die eine grafische Darstellung des Betrags mindestens eines Einstellwerts eines Druckbild- oder Maschinenparameters des Druck- oder Kopiersystems enthält. Die grafische Benutzeroberfläche enthält ferner eine grafische Darstellung des Betrags desselben Einstellwerts einer zweiten Druckeinheit des Druck- oder Kopiersystems. Zumindest der Betrag des Einstellwerts der ersten Druckeinheit ist mit Hilfe der Benutzeroberfläche eingebbar.

Durch eine solche erfindungsgemäße Bedieneinheit wird erreicht, dass dieselben Einstellwerte einer ersten Druckeinheit und einer zweiten Druckeinheit durch dieselbe grafische Benutzeroberfläche dargestellt werden können, wodurch das Einstellen und/oder Kontrollieren von Einstellwerten der ersten Druckeinheit und der zweiten Druckeinheit von einer einzigen Stelle aus durchgeführt werden kann. Dadurch ist ein sogenannter Single-Point of Operation vorhanden. Eine Bedienperson kann so einfach und schnell die Einstellwerte mehrerer Druckeinheiten von dieser Bedieneinheit aus ändern und kontrollieren. Durch die Integration des Einstellwerts der ersten Druckeinheit und des Einstellwerts der zweiten Druckeinheit in eine einzige grafische Benutzeroberfläche ist weiterhin die Fehlermöglichkeit reudziert. Ein Vergleich des Einstellwerts der ersten Druckeinheit und des Einstellwerts der zweiten Druckeinheit ist über die grafische Benutzeroberfläche einfach möglich.

Ein fünfter Aspekt der Erfindung betrifft eine grafische Benutzeroberfläche zum Bedienen eines elektrofotografischen Druck- oder Kopiersystems. Mit der grafischen Benutzeroberfläche erfolgt eine grafische Darstellung des Betrags mindestens eines Einstellwerts eines Druckbild- oder Maschinenparameters einer ersten Druckeinheit des Druck- oder Kopiersystems. Weiterhin erfolgt mit Hilfe der grafischen Benutzeroberfläche die grafische Darstellung desselben Einstellwerts einer zweiten Druckeinheit des Druck- oder Kopiersystems. Zumindest der Betrag des Einstellwerts der ersten Druckeinheit ist mit Hilfe der Benutzeroberfläche eingebbar.

Dadurch wird erreicht, daß eine einfache Bedienung des Druck- oder Kopiersystems mit Hilfe der grafischen Benutzeroberfläche möglich ist. Insbesondere durch die grafische Darstellung desselben Einstellwerts der zweiten Drukkeinheit können Fehler beim Einstellen des Einstellwerts der ersten Druckeinheit vermieden werden.

Ein sechster Aspekt der Erfindung betrifft ein Verfahren zum Bedienen mindestens eines elektrofotografischen Druck- oder Kopiersystems. Bei diesem Verfahren wird durch eine grafische Benutzeroberfläche mit Hilfe einer grafischen Darstellung mindestens ein Einstellwert eines Druckbild- oder Maschinenparameters einer ersten Druckeinheit des Druck- oder Kopiersystems angezeigt. Weiterhin wird mit Hilfe der grafischen Benutzeroberfläche eine grafische Darstellung desselben Einstellwerts einer zweiten Druckeinheit des Druck- oder Kopiersystems angezeigt. Zumindest der Einstellwert der ersten Druckeinheit wird durch eine Benutzereingabe über die Benutzeroberfläche eingegeben.

Durch dieses Verfahren wird erreicht, daß bei einer Einstellung des Einstellwerts der ersten Druckeinheit derselbe Einstellwert der zweiten Druckeinheit anzeigbar ist, wodurch die Eingabe des Eingabewerts vereinfacht wird und Fehler vermieden werden.

Zum besseren Verständnis der vorliegenden Erfindung wird im folgenden auf das in den Zeichnungen dargestellte bevorzugte Ausführungsbeispiel Bezug genommen, das anhand spezifischer Terminologie beschrieben ist. Es sei jedoch darauf hingewiesen, daß der Schutzumfang der Erfindung dadurch nicht eingeschränkt werden soll, da derartige Veränderungen und weitere Modifizierungen an der gezeigten Vorrichtung und/oder dem Verfahren sowie derartige weitere Anwendungen der Erfindung, wie sie darin aufgezeigt sind, als übliches derzeitiges oder künftiges Fachwissen eines zuständigen Fachmannes angesehen werden. Die Figuren zeigen Ausführungsbeispiele der Erfindung, nämlich:
- Figur 1: eine grafische Benutzeroberfläche zum Einstellen des Versatzes des Druckbildes auf der Vorderseite zum Druckbild auf der Rückseite abhängig von einer Druckmarke;
- Figur 2: eine zweite Bedienoberfläche zum Einstellen der Druckqualität eines Drucksystems mit drei Druckern;
- Figur 3: eine dritte Bedienoberfläche zum Einstellen der Position einer Steuermarke; und
- Figur 4: eine vierte Bedienoberfläche zum Bedienen eines Drucksystems.

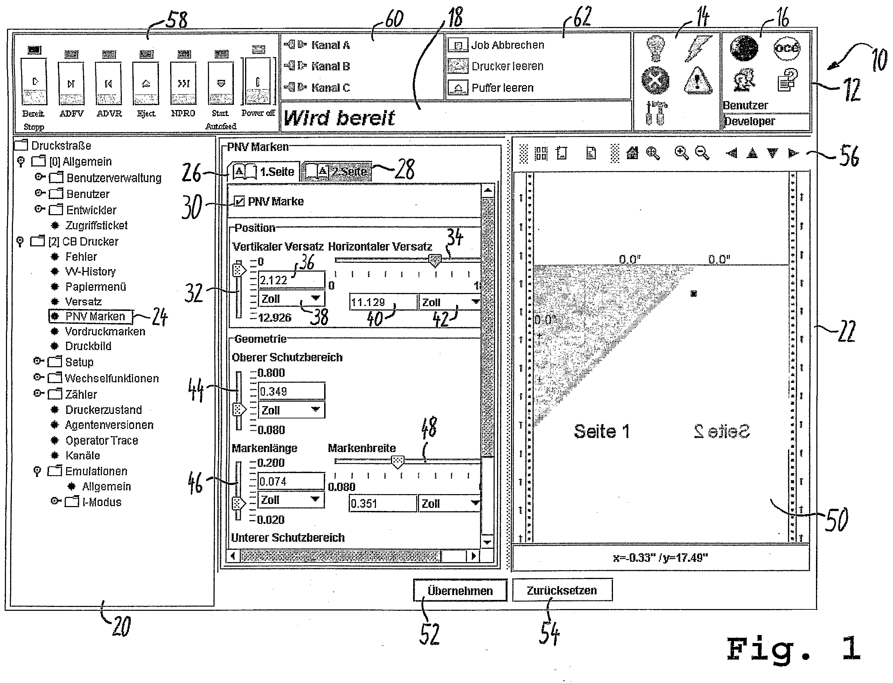

In Figur 1 ist eine erste grafische Benutzeroberfläche 10 gemäß einem ersten Ausführungsbeispiel der Erfindung dargestellt. Die grafische Benutzeroberfläche 10 enthält einen ersten Abschnitt 12 mit Anzeigefeldern und grafischen Funktionstasten, sogenannten Buttons. Der Abschnitt 12 wird auch als Werkzeugleiste oder Toolbar bezeichnet.

Im Bereich 14 der Werkzeugleiste 12 sind grafische Funktionstasten und Anzeigeelemente enthalten, die über den aktuellen Betriebszustand des Drucksystems Auskunft geben. So ist z.B. ein Anzeigeelement zum Anzeigen von Warnungen sowie Alarmmeldungen und ein zweites Anzeigeelement zum Anzeigen von Störungen enthalten. Im Bereich 16 der Werkzeugleiste 12 kann mit Hilfe der dort dargestellten grafischen Funktionstasten Kontakt zu einem Servicecenter des Drucksystemherstellers aufgenommen werden, Benutzereinstellungen vorgenommen oder vorgesehene Hilfehinweise aufgerufen werden. Der Bereich 16 enthält weiterhin ein Anzeigefeld, in dem die Bezeichnung eines aktuell ausgewählten und eingestellten Benutzers angezeigt wird. Im vorliegenden Ausführungsbeispiel ist der Benutzer "Developer" eingestellt. Der Abschnitt 12 enthält weiterhin ein Feld 18 zur Textausgabe, in dem der aktuelle Betriebszustand in Textform ausgegeben wird. So wird nach dem Auftreten eines Störungszustands im Anzeigefeld 18 eine Meldung "nicht bereit" ausgegeben, und in einem dargestellten Konfigurationsmodus der grafischen Benutzeroberfläche 10 wird die Meldung "wird bereit" ausgegeben.

Die grafische Benutzeroberfläche 10 enthält ein Menü 20, in dem mehrere Bedienoberflächen mit Hilfe von Menüeinträgen auswählbar sind, die in einem Abschnitt 22 der grafischen Benutzeroberfläche 10 nach dem Auswählen angezeigt werden. Das Menü 20 ist im wesentlichen nach Baugruppen und Funktionseinheiten des Drucksystems gegliedert. Das Drucksystem wird auch als Druckstraße bezeichnet. Im vorliegenden Ausführungsbeispiel wurde im unteren Menü "CB-Drucker" der Menüeintrag 24 "PNV Marken" ausgewählt. Durch diese Auswahl wird im Abschnitt 22 der grafischen Benutzeroberfläche 10 ein Bedienfeld zum Einstellen der Position von Druckmarken, den sogenannten PNV-Marken angezeigt.

Im Bedienfeld für PNV-Marken sind zwei Registerkarten vorgesehen, wobei die Registerkarte 26 die Seite 1 und die Registerkarte 28 die auf der Rückseite der Seite 1 angeordnete zweite Druckseite 2 zugeordnet ist. Die auf den Registerkarten 26 und 28 enthaltenen Ein- und Ausgabefelder stimmen im wesentlichen überein. Im in Figur 1 dargestellten Bedienfeld zum Einstellen von PNV-Marken ist die Registerkarte 26 der Seite 1 ausgewählt. Es ist ein Auswahlfeld 30, ein sogenanntes Kontrollkästchen, vorgesehen, bei dessen Deaktivierung, d.h. wenn kein Haken in diesem Kontrollkästchen angezeigt wird, keine PNV-Marke auf der Seite 1 erzeugt wird. Mit Hilfe eines grafischen Schiebereglers 32 kann die vertikale Position der PNV-Marke eingestellt werden. Der Einstellwert kann dabei im Bereich von 0 bis 12,926 Zoll eingestellt werden. Im Ausgabefeld 36 wird der mit Hilfe des Schiebereglers 32 eingestellte Wert als Zahlenwert ausgegeben. Mit Hilfe des Auswahlfeldes 38 kann die aktuell auf Zoll voreingestellte Maßeinheit des Zahlenwerts verändert werden, z.B. auf die Einheit Millimeter. Im Feld 36 kann auch über eine Tastatur einer Bedieneinheit, auf der die grafische Benutzeroberfläche 10 angezeigt wird, ein Zahlenwert direkt eingegeben werden. Mit Hilfe eines grafischen Schiebereglers 34 kann die horizontale Position der PNV-Marke voreingestellt werden. Im Ein- und Ausgabefeld 40 wird der aktuell mit Hilfe des Schiebereglers 34 eingestellte Zahlenwert und im Ein- und Ausgabefeld 42 die zum Zahlenwert gehörige Maßeinheit ausgegeben. Wie im Ein- und Ausgabefeld 36 ist auch im Ein- und Ausgabefeld 40 ein Zahlenwert direkt eingebbar.

Die Registerkarte 26 enthält weiterhin einen grafischen Schieberegler 44, einen grafischen Schieberegler 46 und einen grafischen Schieberegler 48. Durch den grafischen Schieberegler 48 wird ein oberer Schutzbereich festgelegt, der vom Seitenbeginn her in vertikaler Richtung einen Bereich festlegt, in dem die PNV-Marke nicht erzeugt wird. Mit Hilfe des Schiebereglers 46 wird die Markenlänge und mit Hilfe des Schiebereglers 48 die Markenbreite festgelegt. Den Schiebereglern 44, 46 und 48 sind ebenso, wie dem Schieberegler 32, jeweils ein Ein- und Ausgabefeld für einen Zahlenwert und ein Ein- und Ausgabefeld für eine Maßeinheit zugeordnet. Dem Schieberegler 48 ist in gleicher Weise, wie dem Schieberegler 34, ein Ein- und Ausgabefeld für einen mit Hilfe des Schiebereglers eingestellten Zahlenwert und ein Ein- und Ausgabefeld für die Maßeinheit des Zahlenwerts vorgesehen.

Durch Ändern der Maßeinheit werden auch die Einstellbereiche der Schieberegler 32, 34, 44, 46 und 48 entsprechend dem Umrechnungsfaktor zur ursprünglich eingestellten Maßeinheit geändert. Auch der aktuell angezeigte Zahlenwert, dem die jeweilige Maßeinheit zugeordnet ist, wird entsprechend dem Umrechnungsfaktor der geänderten Maßeinheit umgerechnet und ausgegeben. Bei einer Eingabe eines Zahlenwerts über eine Tastatur wird der Zeiger des dem Zahlenwert zugeordneten Schiebereglers 32, 34, 44, 46, 48 entsprechend verschoben. Im Bereich 50 des Abschnitts 22 ist die Position der PNV-Marken auf Vorder- und Rückseite grafisch dargestellt. Mit Hilfe einer grafischen Funktionstaste 52 können die eingestellten Werte übernommen und mit Hilfe der grafischen Funktionstaste 54 können die geänderten Einstellwerte zurückgesetzt werden. Mit Hilfe einer Werkzeugleiste 56 kann die Ansicht der PNV-Marken im Bereich 50 eingestellt und verändert werden.

Die Werkzeugleiste 12 enthält weiterhin einen Bereich 58, der grafische Funktionstasten zum Bedienen des Drucksystems enthält. Diese grafische Funktionstasten im Bereich 58 sind als Taster auch hardwaremäßig am Drucksystem vorgesehen. Diese Funktionstasten stimmen optisch in Form, Farbe und Anordnung mit den am Drucksystem vorgesehenen Tastern überein.

Im-Bereich 60 der Werkzeugleiste 12 kann ein Druckkanal des Drucksystems ausgewählt werden, wobei ein ausgewählter und damit aktivierter Kanal im Bereich 60 optisch hervorgehoben bzw. gekennzeichnet ist. Im Bereich 62 können verschiedene Druckjobs von einer Bedienperson, z.B. nach einer Störung, abgebrochen werden.

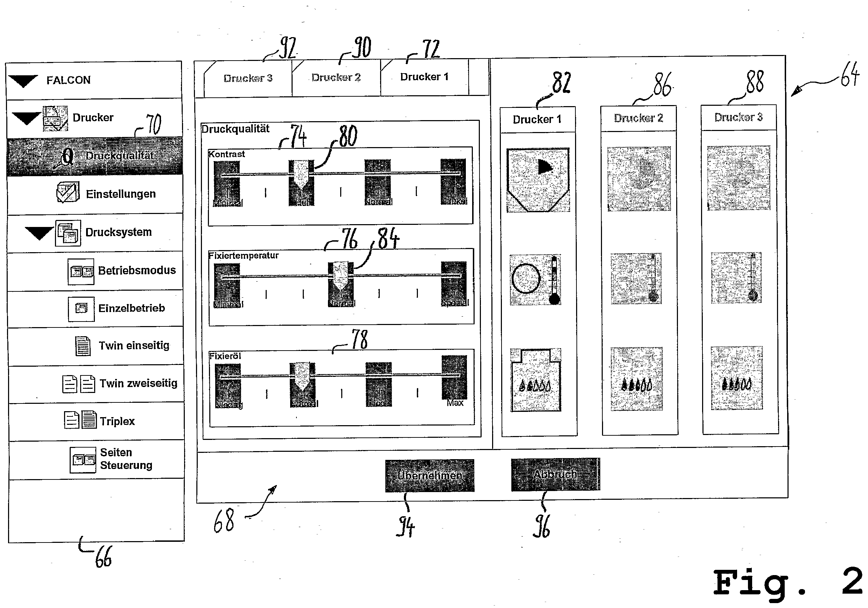

In Figur 2 ist eine grafische Benutzeroberfläche 64 gemäß einem zweiten Ausführungsbeispiel der Erfindung dargestellt. Die grafische Benutzeroberfläche 64 enthält ein Menü 66, in dem eine Bedienoberfläche aus mehreren möglichen Bedienoberflächen auswählbar ist. Die Menüeinträge 70 sind in einer baumartigen Struktur angeordnet und nach Baueinheiten und Funktionsgruppen untergliedert. Eine ausgewählte Bedienoberfläche wird im Fenster 68 der grafischen Benutzeroberfläche 64 angezeigt. Die grafische Benutzeroberfläche 64 ist zum Bedienen eines Drucksystems mit drei Druckern, einer sogenannten Triplex-Einheit, vorgesehen. Dabei druckt der erste Drucker ein Druckbild in einer ersten Farbe auf der Vorderseite des Trägermaterials, der zweite Drucker ein Druckbild in einer zweiten Farbe ebenfalls auf die Vorderseite des Trägermaterials, wobei die Druckbilder übereinander gedruckt werden und ein sogenanntes Spot-Color-Druckbild erzeugt wird. Der dritte Drucker druckt ein Druckbild in der ersten Farbe auf die Rückseite des Trägermaterials. Mit Hilfe der grafischen Benutzeroberfläche 64 können voreingestellte Einstellwerte für jeden der drei Drucker neu eingegeben und/oder geändert werden.

Im Menü 66 ist der Menüeintrag 70 ausgewählt und aktiviert worden, wodurch im Abschnitt 68 der grafischen Benutzeroberfläche 64 eine Bedienoberfläche zum Einstellen der Druckqualität für die Drucker 1, 2 und 3 angezeigt wird. Durch Auswählen der Registerkarte 72 wird diese aktiviert, wobei der Schieberegler 74 zum Einstellen des Kontrasts eines Druckbilds, der Schieberegler 76 zum Einstellen der Fixiertemperatur einer Fixiereinheit und der Schieberegler 78 zum Einstellen der Fixierölmenge den über die Registerkarte 72 ausgewählten Drucker 1 betreffen. Durch Verschieben des Schiebeschlittens 80 des Schiebereglers 74 wird in der symbolhaften Darstellung in dem Anzeigefeld 82 die mit Hilfe eines Kreisdiagramms dargestellte Kontrasteinstellung für Drucker 1 abhängig von der Verschiebung des Schlittens 80 am Schieberegler 74 geändert. Die grafische Anzeige der Fixiertemperatur im Anzeigefeld 82 mit Hilfe eines symbolhaft angedeuteten Thermometers erfolgt ebenfalls abhängig von dem mit dem Schlitten 84 des Schiebereglers 76 eingestellten Wertes. Bei der symbolhaften Darstellung der Fixiertemperatur im Anzeigefeld 82 wird ein Füllstand in der Meßkapillare abhängig von der Schiebeposition des Schlittens 84 am Schieberegler 76 angezeigt.

Der Einstellwert des Schiebereglers 78 wird ebenfalls im Anzeigefeld 82 mit Hilfe einer symbolhaften Darstellung grafisch angezeigt. Dazu sind im Anzeigefeld 82 eine Reihe von fünf tropfenförmigen Anzeigeelementen vorgesehen, die abhängig vom Einstellwert des Schiebereglers 78 ein Teil oder alle Anzeigeelemente mit der Rahmenfarbe der Anzeigeelemente ausgefüllt oder mit der Hintergrundfarbe der Anzeigelemente gefüllt sind. Dadurch wird die Fixierölmenge grafisch veranschaulicht, die zum Fixieren eines auf dem Trägermaterial aufgebrachten Tonerbilds genutzt wird.

Neben dem Anzeigefeld 82, das den Drucker 1 betrifft, ist ein Anzeigefeld 86 und ein Anzeigefeld 88 vorgesehen, wobei das Anzeigefeld 86 die Einstellungen der Druckqualität für den Drucker 2 und das Anzeigefeld 88 die Einstellungen für die Druckqualität des Druckers 3 betrifft. Durch die Auswahl der Registerkarte 72 ist das Anzeigefeld 82 kontrastreich und die Anzeigefelder 86 und 88 kontrastarm dargestellt. So kann das Anzeigefeld 82 z.B. in einer Farbdarstellung und die Anzeigefelder 86 und 88 in einer Graustufendarstellung angezeigt werden. Dadurch ist verdeutlicht, daß die mit Hilfe der Schieberegler 74, 76 und 78 vorgenommenen Einstellungen den Drucker 1 betreffen. Neben der Registerkarte 72 sind Registerkarten 90 und 92 vorgesehen, wobei die Registerkarte 90 den Drucker 2 und die Registerkarte 92 den Drucker 3 betrifft. Die Registerkartenbezeichnung des ausgewählten Druckers wird jeweils in einer schwarzen Farbe angezeigt und die Registerkartenbezeichnungen der nicht ausgewählten Drucker in einer grauen Farbe. Dadurch tritt die Bezeichnung des mit Hilfe der Registerkarte 72, 90, 92 ausgewählten Druckers deutlich hervor. Die Registerkarten 72, 90, 92 enthalten jeweils dieselben Schieberegler 74, 76, 78 für Kontrast, Fixiertemperatur und Fixieröl.

Wie bereits weiter oben für das Anzeigefeld 82 erläutert, wird durch Auswahl der Registerkarte 72, 90, 92 das zur Registerkarte 72, 90, 92 zugeordnete Anzeigefeld 82, 86, 88 bzw. das Anzeigefeld 82, 86, 88, das demselben Drucker zugeordnet ist, wie der Registerkarte 72, 90, 92, in einer Farbdarstellung angezeigt, wobei die beiden übrigen Anzeigefelder 82, 86, 88 in einer Graustufendarstellung angezeigt werden. Durch die übersichtliche Darstellung der nebeneinander angeordneten Anzeigefelder 82, 86 und 88, kann eine Bedienperson beim Einstellen der Druckqualitätparameter Kontrast, Fixiertemperatur und Fixieröl einfach die Einstellwerte des betroffenen Druckers 1, 2, 3 mit den Einstellwerten der anderen Drucker des Drucksystems vergleichen. Fehleinstellungen werden durch diesen optischen Vergleich für eine Bedienperson offensichtlich und können dadurch einfach vermieden werden. Bei anderen Bedienfeldern, z.B. bei einem Bedienfeld zum Einstellen der Papierparameter, werden identische Einstellwerte für alle drei Drucker genutzt. Eine Unterscheidung zwischen den einzelnen Druckern 1, 2 und 3 ist dort nicht sinnvoll, da dasselbe Trägermaterial allen drei Druckeinheiten zugeführt wird. Bei einer Änderung des zugeführten Trägermaterial muß dadurch für alle drei Drucker nur einmal ein Einstellwert geändert werden.

Bei einem anderen Ausführungsbeispiel sind z.B. die Einstellwerte der Fixiertemperatur des Druckers 1, des Drukkers 2 und des Druckers 3 miteinander derart gekoppelt, daß beim Erhöhen der Fixiertemperatur des Druckers 3 automatisch die Fixiertemperaturen der Drucker 1 und 2 verringert werden. Dadurch wird erreicht, daß das Trägermaterial bei der Fixierung im ersten und zweiten Drucker relativ gering beansprucht wird und durch die relativ hohe Fixiertemperatur im Drucker 3 eine qualitativ hochwertige und dauerhafte Fixierung der Tonerbilder auf dem Trägermaterial erfolgt.

Mit Hilfe der grafischen Funktionstaste 94 können die aktuell veränderten Einstellwerte übernommen werden und mit Hilfe der Funktionstaste 96 können die aktuell geänderten Einstellwerte verworfen und die Bedienoberfläche zum Einstellen der Druckqualität verlassen werden.

Die grafische Benutzeroberfläche 64 nach Figur 2 ist für eine Bedienung mit Hilfe eines tastsensitiven Bildschirms optimiert worden und ist für eine sogenannte Fingerbedienung geeignet. Das Verstellen der Schiebeschlitten 80 und 84 der Schieberegler 74, 76, 78, kann stufenweise durch Berühren der dunkel hinterlegten Flächen verändert werden. Der Schiebeschlitten 80, 84 wird auch als Skalenzeiger bezeichnet. Die Auswahl der jeweiligen Registerkarte 72, 90, 92 erfolgt durch Berühren des jeweiligen Registerkartenreiters. Die Auswahl der Menüeinträgen und das Öffnen der Untermenüs erfolgt ebenfalls durch eine Fingerberührung des jeweiligen Menüs oder Menüeintrags.

Bei einem weiteren Ausführungsbeispiel werden wiederholt verwendete Einstellwerte durch die Bedieneinheit gespeichert. Die gespeicherten Einstellwerte werden als Skalenwerte und als Verstellpositionen zum Unterteilen einer Skala des jeweiligen grafischen Schiebereglers 74, 76, 78 oder eines Kreisdiagramms bzw. Drehreglers zum Eingeben der Einstellwerte genutzt.

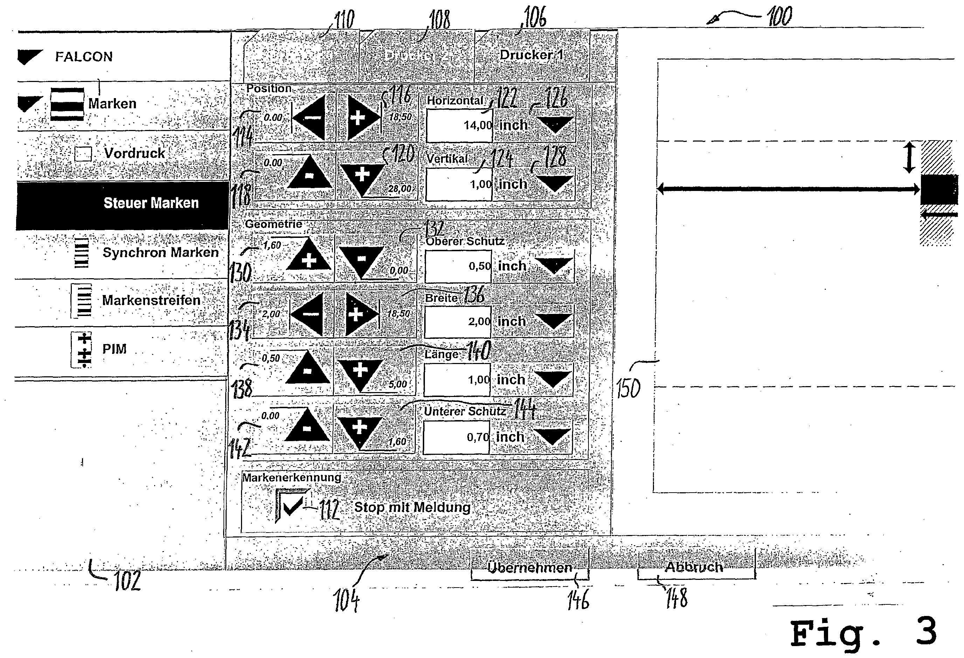

In Figur 3 ist eine grafische Benutzeroberfläche 100 ähnlich der Benutzeroberfläche 64 nach Figur 2 dargestellt. Die grafische Benutzeroberfläche 100 enthält ein Menü 102. Im Menü 102 ist der Menüeintrag Steuermarken aktiviert worden, wodurch im Abschnitt 104 der grafischen Benutzeroberfläche 100 eine Bedienoberfläche zum Einstellen einer Steuermarkenposition angezeigt wird. Eine Steuermarke wird mit Hilfe des Druckers 1 erzeugt und von dem Drucker 2 und Drucker 3 erfaßt, die dann jeweils abhängig von der Position dieser Steuermarken die Position eines zu erzeugenden Druckbilds festlegen. Der Drucker 1, der in Transportrichtung des Trägermaterials vor dem Drucker 2 und dem Drucker 3 angeordnet ist und somit als erster dieser drei Drucker ein Druckbild auf dem zugeführten Trägermaterial erzeugt, erzeugt zusätzlich zum eigentlichen Druckbild eine solche Steuermarke. Dadurch, daß die Steuermarke nur vom Drucker 1 erzeugt wird, ist beim Auswählen des Menüeintrags Steuermarken automatisch die Registerkarte 106 für Drucker 1 aktiviert.

Die Registerkarten 108 und 110, die bei anderen Bedienoberflächen, wie z.B. bei der Bedienoberfläche zum Einstellen der Druckqualität nach Figur 2, die Drucker 2 und 3 betreffen, sind bei der Bedienoberfläche zum Einstellen der Steuermarkenposition nicht aktivierbar. Beim Einstellen der Steuermarkenposition für Drucker 1 wird beim Drukker 2 und beim Drucker 3 jeweils automatisch eine Markenerkennung aktiviert, wenn ein Eingabefeld 112, ein sogenanntes Kontrollkästchen, aktiviert ist. Mit Hilfe von grafischen Funktionstasten 114 und 116 wird die horizontale Position und mit Hilfe der Funktionstasten 118, 120 die vertikale Position in voreingestellten Schritten bei einer Aktivierung dieser Funktionstasten 114, 116 verändert. Die Grenzwerte der Position sind auf den Funktionstasten 114, 116 enthalten.

Der aktuelle Einstellwert ist in Ein- und Ausgabefeldern 122 und 124 jeweils angezeigt. In einem Ein- und Ausgabefeld 126 wird die zum im Ein- und Ausgabefeld 122 ausgegebenen Zahlenwert zugeordnete Maßeinheit angezeigt, wobei diese Maßeinheit mit Hilfe eines sogenannten Auswahlmenüs verändert werden kann. Bei einer Änderung der Maßeinheit mit Hilfe des Auswahlmenüs wird dann der aktuell im Ein- und Ausgabefeld 122 angezeigte Zahlenwert abhängig vom Umrechnungsfaktor der ursprünglichen Maßeinheit zur geänderten Maßeinheit umgerechnet und angezeigt. In gleicher Weise wie die Anzeige und Einstellung der Maßeinheit mit Hilfe des Eingabe- und Ausgabefeldes 126 ist im Ein- und Ausgabefeld 128 eine Maßeinheit zum im Ein- und Ausgabefeld 124 ausgegebenen Zahlenwert angegeben. Auch die auf den Funktionstasten angezeigten Grenzwerte werden abhängig vom Umrechnungsfaktor beim Ändern der Maßeinheit umgerechnet und angezeigt.

Mit weiteren Funktionstasten 130 bis 144 wird ein oberer Schutzbereich, die Breite der Steuermarke, die Länge der Steuermarke und ein unterer Schutzbereich festgelegt. Die aktuell eingestellten Zahlenwerte werden in zugeordneten Ein- und Ausgabefeldern angezeigt, denen jeweils ein Ein- und Ausgabefeld zum Anzeigen und Ändern der Maßeinheit zugeordnet ist.

Die grafische Benutzeroberfläche 100 enthält weiterhin eine grafische Funktionstaste 146 zum Übernehmen der geänderten Einstellwerte, wodurch die Einstellwerte dann zum Steuern des Drucksystems genutzt werden. Mit Hilfe einer weiteren Funktionstaste 148 können die geänderten Einstellwerte verworfen werden und die Bedienoberfläche zum Einstellen der Steuermarken wird verlassen. Weiterhin enthält die grafische Benutzeroberfläche 100 einen Anzeigebereich 150, in dem die Position der Steuermarke auf dem Trägermaterial grafisch dargestellt wird, wobei bei einer Änderung der Einstellwerte die Position der Einstellmarke bzw. die Größe der Einstellmarke abhängig von den vorgenommenen Änderungen verschoben wird.

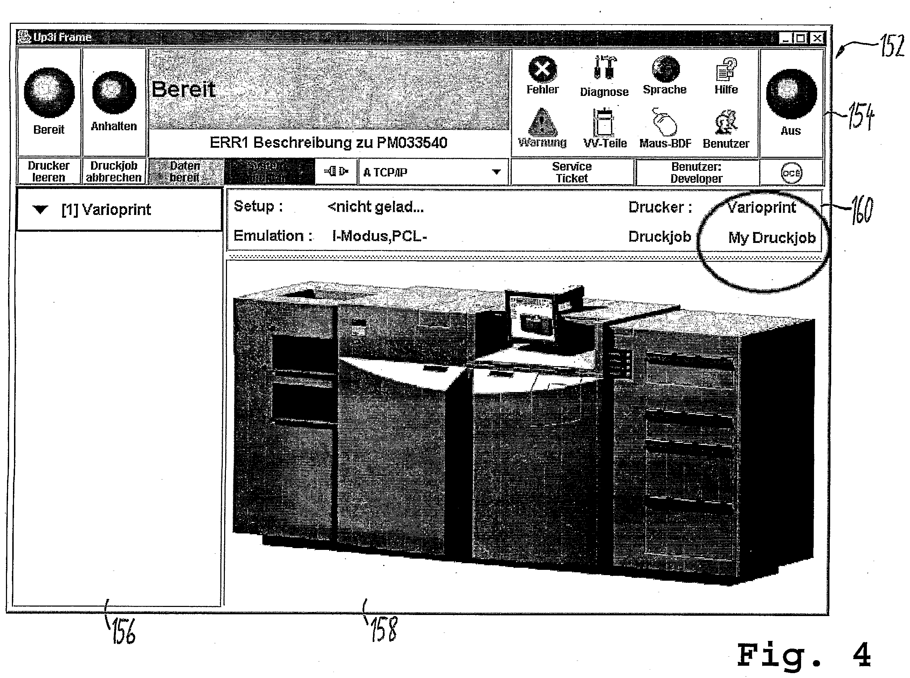

In Figur 4 ist eine grafische Benutzeroberfläche 152 gemäß einem vierten Ausführungsbeispiel der Erfindung dargestellt. Diese grafische Benutzeroberfläche enthält einen ersten Abschnitt 154 mit einer sogenannten Werkzeugleiste, die grafische Funktionstasten, sogenannte Buttons, zum Steuern des Drucksystems enthält. Die grafische Benutzeroberfläche 152 enthält ein Menü 156, in dem eine in einem Abschnitt 158 der grafischen Benutzeroberfläche 152 angezeigte Bedienoberfläche auswählbar ist. Weiterhin enthält die grafische Benutzeroberfläche 152 einen Abschnitt 160, in dem die Ein- und Ausgabe wichtiger Druckparameter erfolgt. So wird z.B. der Name des Druckers und der Name des aktuellen Druckjobs ausgegeben. Weiterhin enthält das Textausgabefeld 160 Informationen über ein Setup-Programmmodul und über unterstützte Druckersprachen.

In dem Drucker, der mit Hilfe der Bedienoberfläche nach Figur 4 bedient und gesteuert wird, können alternativ eine oder zwei Druckeinheiten vorgesehen sein, wobei dann für die zwei Druckeinheiten die gleichen Einstellungsmöglichkeiten vorgesehen werden können, wie für zwei Drucker im Zusammenhang mit den Figuren 1 bis 3 beschrieben. Obgleich in den Zeichnungen und in der vorhergehenden Beschreibung bevorzugte Ausführungsbeispiele aufgezeigt und detailliert beschrieben sind, sollte dies als rein beispielhaft und die Erfindung nicht einschränkend angesehen werden. Es wird darauf hingewiesen, daß nur die bevorzugten Ausführungsbeispiele dargestellt und beschrieben sind und sämtliche Veränderungen und Modifizierungen, die derzeit und künftig im Schutzumfang der Ansprüche liegen, geschützt werden sollen.

### Bezugszeichenliste

- 10, 64, 100, 152: grafische Benutzeroberfläche
- 12, 56, 154: Werkzeugleiste
- 58, 60, 62, 14, 16, 18: Bereich der Werkzeugleiste
- 20, 66, 102, 156: Menü
- 24, 70: Menüeintrag
- 26, 28, 72, 90:
- 92, 106, 108, 110: Registerkarten
- 30, 112: Kontrollkästchen
- 32, 34, 44, 46, 48, 74, 76, 78: Schieberegler
- 80, 84: Schiebeschlitten
- 82, 86, 88: Anzeigefeld
- 36, 38, 40, 42, 122, 124, 126, 128: Ein- und Ausgabefelder
- 22, 68, 104, 50, 150: Anzeigebereiche
- 52, 54, 94, 96, 146, 148: grafische Funktionstasten

## Patentansprüche

1. Bedieneinheit für mindestens ein elektrofotografisches Druck- oder Kopiersystem
mit einer Anzeigeeinheit, auf der eine grafische Benutzeroberfläche (10, 64, 100, 152) angezeigt wird, die eine grafische Darstellung (74, 76, 78, 82) des Betrags mindestens eines Einstellwertes eines Druckbild- oder Maschinenparameters einer Druckeinheit des Druck- oder Kopiersystems enthält,
wobei die grafische Benutzeroberfläche (10, 64, 100, 152) eine grafische Darstellung (86, 88) des Betrags desselben Einstellwerts einer zweiten Druckeinheit des Druck- oder Kopiersystems enthält,
wobei zumindest der Betrag des Einstellwerts (74, 76, 78) der ersten Druckeinheit mit Hilfe der Benutzeroberfläche (10, 64, 100, 152) eingebbar ist,
wobei wiederholt verwendete Einstellwerte durch die Bedieneinheit speicherbar sind und diese gespeicherten wiederholt verwendeten Einstellwerte als Skalenwerte zum Unterteilen einer Skala eines grafischen Schiebereglers (74, 76, 78) oder eines Kreisdiagramms dienen, wobei jede Druckeinheit eine separate Bedieneinheit hat, wobei der Einstellwert der ersten Druckeinheit und der Einstellwert der zweiten Druckeinheit jeweils an der Bedieneinheit der ersten Druckeinheit und der Bedieneinheit der zweiten Druckeinheit anzeigbar und eingebbar sind.

2. Bedieneinheit nach Anspruch 1, **dadurch gekennzeichnet, dass** der Einstellwert (74, 76, 78) den Kontrast, die Helligkeit, die Fixierölmenge, Papierparameter, und/oder eine Druckmarkenposition der Druckeinheiten betrifft.

3. Bedieneinheit nach Anspruch 1 oder 2, **dadurch gekennzeichnet, dass** die grafische Darstellung der Einstellwerte mit Hilfe dargestellter Ziffern (122, 124), mit Hilfe eines grafischen Schiebereglers (74, 76, 78) und/oder mit Hilfe einers Kreisdiagramms ein- und ausgebbar ist.

4. Bedieneinheit nach Anspruch 3, **dadurch gekennzeichnet, dass** der aktuelle Einstellwert des Schiebereglers (74, 76, 78) mit Hilfe eines Skalenzeigers (80, 84) auf einer Skala des Schiebereglers (74, 76, 78) angezeigt ist, wobei der Skalenzeiger (80, 84) mit Hilfe eines Eingabegerätes verschiebbar ist, dass bei der Darstellung des Einstellwertes mit Hilfe von Ziffern der Betrag des Einstellwertes durch grafische Funktionstasten (114, 116) schrittweise erhöhbar und verringerbar ist, und dass der Betrag des mit Hilfe des Kreisdiagramms ausgegebenen Einstellwertes durch Verschieben der Position einer am Kreisdiagramm angeordneten Einstellmarke und/oder durch die Eingabe über grafische Funktionstasten (114, 116) änderbar ist.

5. Bedieneinheit nach einem der vorhergehenden Ansprüche, **dadurch gekennzeichnet, dass** der Einstellwert der zweiten Druckeinheit mit Hilfe der Benutzeroberfläche (64) eingebbar ist.

6. Bedieneinheit nach einem der vorhergehenden Ansprüche, **dadurch gekennzeichnet, dass** eine zentrale Bedieneinheit für die erste Druckeinheit und die zweite Druckeinheit vorgesehen ist.

7. Bedieneinheit nach einem der vorhergehenden Ansprüche, **dadurch gekennzeichnet, dass** der Einstellwert als Balken oder Symbolgrafik dargestellt wird, wobei der Einstellwert über eine Zifferneingabe und/oder über grafische Funktionsdaten änderbar ist, und wobei die Balken- oder Symbolgrafik abhängig vom Eingabewert verändert wird.

8. Bedieneinheit nach einem der vorhergehenden Ansprüche, **dadurch gekennzeichnet, dass** der Betrag des Einstellwerts der ersten Druckeinheit unabhängig von dem Betrag der zweiten Druckeinheit änderbar ist.

9. Bedieneinheit nach Anspruch 8, **dadurch gekennzeichnet, dass** der Einstellwert die Helligkeit, den Kontrast, die Tonereigenschaften und/oder die Positionsmarkenverschiebung der jeweiligen Druckeinheit betrifft, wobei abhängig von der Position der Positionsmarke auf dem Trägermaterial die Position des durch die Druckeinheit zu erzeugenden Druckbildes festgelegt wird.

10. Bedieneinheit nach einem der vorhergehenden Ansprüche, **dadurch gekennzeichnet, dass** bei einer Änderung des Betrages des Einstellwerts der ersten Druckeinheit in gleicher Weise der Betrag des Einstellwertes der zweiten Druckeinheit geändert wird, und dass beim Ändern des Betrages des Einstellwerts der zweiten Druckeinheit der Betrag des Einstellwerts der ersten Druckeinheit entsprechend geändert wird.

11. Bedieneinheit nach Anspruch 8, **dadurch gekennzeichnet, dass** der Einstellwert mindestens einen Parameter des Trägermaterials betrifft.

12. Bedieneinheit nach einem der vorhergehenden Ansprüche, **dadurch gekennzeichnet, dass** die erste Druckeinheit und die zweite Druckeinheit separate Baueinheiten sind.

13. Bedieneinheit nach einem der vorhergehenden Ansprüche, **dadurch gekennzeichnet, dass** die erste Druckeinheit und die zweite Druckeinheit derart miteinander gekoppelt sind, dass die erste Druckeinheit auf der Vorderseite eines Trägermaterials ein Druckbild erzeugt und die zweite Druckeinheit auf der Rückseite des Trägermaterials ein Druckbild erzeugt, oder wobei die erste Druckeinheit auf der Vorderseite des Trägermaterials ein erstes Druckbild erzeugt und die zweite Druckeinheit auf der Vorderseite des Trägermaterials ein zweites Druckbild erzeugt.

14. Bedieneinheit nach Anspruch 13, **dadurch gekennzeichnet, dass** die Art und/oder Farbe des Tonermaterials, mit dem die erste Druckeinheit ein Druckbild erzeugt, von der Art und/oder Farbe des Tonermaterials, mit dem die zweite Druckeinheit ein Druckbild erzeugt, verschieden sind.

15. Bedieneinheit nach einem der Ansprüche 13 oder 14, **dadurch gekennzeichnet, dass** das Trägermaterial ein endloses Trägermaterial ist.

16. Bedieneinheit nach einem der vorhergehenden Ansprüche, **dadurch gekennzeichnet, dass** die grafische Benutzeroberfläche (10, 64, 100, 152) weiterhin die grafische Darstellung desselben Einstellwertes einer dritten Druckeinheit enthält.

17. Bedieneinheit nach einem der vorhergehenden Ansprüche, **dadurch gekennzeichnet, dass** die grafische Bedienoberfläche ein Anzeigeelement (154, 166) enthält, das das Vorhandensein noch zu verarbeitender Druckdaten signalisiert.

18. Bedieneinheit nach einem der vorhergehenden Ansprüche, **dadurch gekennzeichnet, dass** ein Anzeigeelement (60) vorhanden ist, das zumindest einen aktiven Druckkanal des Druckers anzeigt.

19. Bedieneinheit nach Anspruch 17 oder 18, **dadurch gekennzeichnet, dass** das Anzeigeelement ein farblich eingefärbtes Anzeigefeld und/oder eine Textausgabe ist.

20. Bedieneinheit nach Anspruch 19, **dadurch gekennzeichnet, dass** das Anzeigefeld ein grafisches Symbol enthält.

21. Bedieneinheit nach Anspruch 19 oder 20, **dadurch gekennzeichnet, dass** das Anzeigefeld in einer Werkzeugleiste (12, 154) der grafischen Benutzeroberfläche (10, 64, 100, 152) angeordnet ist, wobei das Anzeigefeld in einem ersten Betriebszustand in einer kontrastarmen ersten Farbe eingefärbt ist und in einem zweiten Betriebszustand im wesentlichen in einer zur Umgebung des Anzeigefelds kontrastreichen Farbe eingefärbt ist.

22. Verfahren zum Bedienen mindestens eines elektrofotografischen Druck- oder Kopiersystems nach Anspruch 1, bei dem durch eine grafische Benutzeroberfläche (10, 64, 100, 152) mit einer grafischen Darstellung (74, 76, 78, 82, 122) mindestens ein Einstellwert eines Druckbild- oder Maschinenparameters einer Druckeinheit des Druck- oder Kopiersystems angezeigt wird,
zumindest der Einstellwert (74, 76, 78, 80, 122) durch eine Benutzereingabe über die Benutzeroberfläche (10, 64, 100, 152) eingegeben wird, wobei wiederholt verwendete Einstellwerte durch die Bedieneinheit gespeichert werden, wobei diese wiederholt verwendeten Einstellwerte als Skalenwerte zum Unterteilen einer Skala eines grafischen Schiebereglers (74, 76, 78) oder eines Kreisdiagramms dienen, wobei die Anzeige der grafischen Darstellung (74, 76, 78, 82, 122) durch die grafische Benutzeroberfläche (10, 64, 100, 152) des mindestens einen Einstellwertes des Druckbild- oder Maschinenparameters eine erste Druckeinheit des Druck- oder Kopiersystems betrifft, wobei mit Hilfe der grafischen Benutzeroberfläche (10, 64, 100, 152) eine grafische Darstellung (74, 76, 78, 80, 122) desselben Einstellwerts einer zweiten Druckeinheit des Druck- oder Kopiersystems angezeigt wird, und wobei zumindest der Einstellwert (74, 76, 78, 80, 122) der ersten Druckeinheit durch eine Benutzereingabe über die Benutzeroberfläche (10, 64, 100, 152) eingegeben wird.

## Claims

1. An operating unit for at least one electrophotographic printing or copying system, comprising:
a display unit on which a graphical user interface (10, 64, 100, 152) is displayed that comprises a graphical representation (74, 76, 78, 82) of the amount of at least one setting value of a print image or machine parameter of a printing unit of the printing or copying system;
wherein the graphical user interface (10, 64, 100, 152) comprises a graphical representation (86, 88) of the amount of the same setting value of a second printing unit of the printing or copying system,
wherein at least the amount of the setting value (74, 76, 78) of the first printing unit can be input with the aid of the user interface (10, 64, 100, 152),
wherein repeatedly-used setting values are storable by the operating unit and these stored repeatedly-used setting values serve as scale values for dividing a scale of a graphical slide control (74, 76, 78) or of a circle diagram,
wherein each printing unit has a separate operating unit, wherein the setting value of the first printing unit and the setting value of the second printing unit can each time be displayed and input at the operating unit of the first printing unit and the operating unit of the second printing unit.

2. The operating unit according to claim 1, **characterized in that** the setting value (74, 76, 78) concerns the contrast, the brightness, the fixing oil quantity, paper parameters and/or a print marker position of the printing units.

3. The operating unit according to claim 1 or 2, **characterized in that** the graphical representation of the setting values can be input and output with the aid of displayed figures (122, 124), with the aid of a graphical slide control (74, 76, 78) and/or with the aid of a circle diagram.

4. The operating unit according to claim 3, **characterized in that** the current setting value of the slide control (74, 76, 78) is displayed on a scale of the slide control (74, 76, 78) with the aid of a scale pointer (80, 84), wherein the scale pointer (80, 84) is shiftable with the aid of an input device, that given representation of the setting value with the aid of figures the amount of the setting value can be increased and reduced in steps via graphical function keys (114, 116), and that the amount of the setting value output with the aid of the circle diagram is changeable by shifting the position of a setting marker arranged on the circle diagram and/or via the input via graphical function keys (114, 116).

5. The operating unit according to one of the preceding claims, **characterized in that** the setting value of the second printing unit can be input with the aid of the user interface (64).

6. The operating unit according to one of the preceding claims, **characterized in that** a central operating unit is provided for the first printing unit and the second printing unit.

7. The operating unit according to one of the preceding claims, **characterized in that** the setting value is represented as a bar or symbol graphic, wherein the setting value is changeable via a figure input or via graphical function data, and wherein the bar or symbol graphic is changed dependent on the input value.

8. The operating unit according to one of the preceding claims, **characterized in that** the amount of the setting value of the first printing unit is changeable independent of the amount of the second printing unit.

9. The operating unit according to claim 8, **characterized in that** the setting value concerns the brightness, the contrast, the toner properties and/or the position marker shifting of the respective printing unit, wherein dependent on the position of the position marker on the carrier material the position of the print image to be generated by the printing unit is established.

10. The operating unit according to one of the preceding claims, **characterized in that** given a change of the amount of the setting value of the first printing unit, the amount of the setting value of the second printing unit is changed in a same manner, and that given a change of the amount of the setting value of the second printing unit, the amount of the setting value of the first printing unit is changed accordingly.

11. The operating unit according to claim 8, **characterized in that** the setting value concerns at least one parameter of the carrier material.

12. The operating unit according to one of the preceding claims, **characterized in that** the first printing unit and the second printing unit are separate structural units.

13. The operating unit according to one of the preceding claims, **characterized in that** the first printing unit and the second printing unit are coupled with one another such that the first printing unit generates a print image on the front side of a carrier material and the second printing unit generates a print image on the back side of the carrier material, or wherein the first printing unit generates a first print image on the front side of the carrier material and the second printing unit generates a second print image on the front side of the carrier material.

14. The operating unit according to claim 13, **characterized in that** the type and/or color of the toner material with which the first printing unit generates a print image are different from the type and/or color of the toner material with which the second printing unit generates a print image.

15. The operating unit according to one of the claims 13 or 14, **characterized in that** the carrier material is a continuous carrier material.

16. The operating unit according to one of the preceding claims, **characterized in that** the graphical user interface (10, 64, 100, 152) furthermore comprises the graphical representation of the same setting value of a third printing unit.

17. The operating unit according to one of the preceding claims, **characterized in that** the graphical user interface comprises a display element (154, 166) that signals the presence of print data still to be processed.

18. The operating unit according to one of the preceding claims, **characterized in that** a display element (60) is provided that displays at least one active print channel of the printer.

19. The operating unit according to claim 17 or 18, **characterized in that** the display element comprises a colored display field and/or a text output.

20. The operating unit according to claim 19, **characterized in that** the display field contains a graphical symbol.

21. The operating unit according to claim 19 or 20, **characterized in that** the display field is arranged in a toolbar (12, 154) of the graphical user interface (10, 64, 100, 152), wherein the display field is colored in a low-contrast first color in a first operating state and, in a second operating state, is colored substantially in a color in a high-contrast relative to the surroundings of the display field.

22. A method for operating at least one electrophotographic printing or copying system according to claim 1,
in which by means of a graphical user interface (10, 64, 100, 152) with a graphical representation (74, 76, 78, 82, 122) at least one setting value of a print image or machine parameter of a printing unit of the printing or copying system is displayed,
at least the setting value (74, 76, 78, 80, 122) is input by a user input via the user interface (10, 64, 100, 152), wherein repeatedly-used setting values are stored by the operating unit, wherein these repeatedly-used setting values serve as scale values for dividing a scale of a graphical slide control (74, 76, 78) or of a circle diagram, wherein
the display of the graphical representation (74, 76, 78, 82, 122) by the graphical user interface (10, 64, 100, 152) of the at least one setting value of the print image or machine parameter concerns a first printing unit of the printing or copying system,
wherein with the aid of the graphical user interface (10, 64, 100, 152) a graphical representation (74, 76, 78, 80, 122) of the same setting value of a second printing unit of the printing or copying system is displayed, and
wherein at least the setting value (74, 76, 78, 80, 122) of the first printing unit is input by a user input via the user interface (10, 64, 100, 152).

## Revendications

1. Unité de commande pour au moins un système électrophotographique d'impression ou de copie, comprenant une unité d'affichage sur laquelle est affichée une surface graphique d'utilisateur (10, 64, 100, 152) qui contient une représentation graphique (74, 76, 78, 82) du niveau d'au moins une valeur de réglage d'un paramètre d'une image ou d'une machine d'impression d'une unité d'impression du système d'impression ou de copie,
la surface graphique d'utilisateur (10, 64, 100, 152) contenant une représentation graphique (86, 88) du niveau de la même valeur de réglage d'une deuxième unité d'impression du système d'impression ou de copie, au moins le niveau de la valeur de réglage (74, 79, 78) de la première unité d'impression pouvant être introduit à l'aide de la surface d'utilisateur (10, 64, 100, 152),
des valeurs de réglage utilisées à répétition pouvant être conservées en mémoire dans l'unité de commande et ces valeurs de réglage utilisées à répétition et conservées en mémoire servant de valeurs d'échelle qui divisent une échelle d'un régulateur graphique coulissant (74, 76, 78) ou d'un diagramme circulaire,
chaque unité d'impression possédant une unité de commande séparée, la valeur de réglage de la première unité d'impression et la valeur de réglage de la deuxième unité d'impression pouvant toutes deux êtres affichées et introduites sur l'unité de commande de la première unité d'impression et sur l'unité de commande de la deuxième unité d'impression.

2. Unité de commande selon la revendication 1, **caractérisée en ce que** la valeur de réglage (74, 76, 78) concerne le contraste, la luminosité, le niveau d'huile de fixation, des paramètres du papier et/ou la position d'un repère d'impression des unités d'impression.

3. Unité de commande selon les revendications 1 ou 2, **caractérisée en ce que** la représentation graphique des valeurs de réglage peut être introduite et/ou présentée à l'aide de la présentation de chiffres (122, 124), à l'aide d'un régulateur graphique coulissant (74, 76, 78) et/ou à l'aide d'un diagramme circulaire.

4. Unité de commande selon la revendication 3, **caractérisée en ce que** la valeur de réglage en cours du régulateur coulissant (74, 76, 78) est affichée à l'aide d'un pointeur d'échelle (80, 84) sur une échelle du régulateur coulissant (74, 76, 78), le pointeur d'échelle (80, 84) pouvant être déplacé à l'aide d'un appareil d'introduction, de telle sorte que lors de la présentation de la valeur de réglage à l'aide de chiffres, le niveau de la valeur de réglage puisse être augmenté ou diminué pas à pas par des touches (114, 116) de fonctions graphiques et **en ce que** le niveau de la valeur de réglage présenté à l'aide du diagramme circulaire peut être modifié par déplacement de la position d'un repère de réglage et disposé sur le diagramme circulaire et/ou par introduction par l'intermédiaire de touches (114, 116) de fonctions graphiques.

5. Unité de commande selon l'une des revendications précédentes, **caractérisée en ce que** la valeur de réglage de la deuxième unité d'impression peut être introduite à l'aide de la surface d'utilisateur (64).

6. Unité de commande selon l'une des revendications précédentes, **caractérisée en ce qu'**une unité centrale de commande est prévue pour la première unité d'impression et la deuxième unité d'impression.

7. Unité de commande selon l'une des revendications précédentes, **caractérisée en ce que** la valeur de réglage est représentée sous la forme d'une barre ou d'un symbole graphique, la valeur de réglage pouvant être modifiée par l'intermédiaire de l'introduction de chiffres, par l'intermédiaire de données de fonctions graphiques, le graphique en barres ou en symboles étant modifié en fonction de la valeur introduite.

8. Unité de commande selon l'une des revendications précédentes, **caractérisée en ce que** le niveau de la valeur de réglage de la première unité d'impression peut être modifié indépendamment du niveau de la deuxième unité d'impression.

9. Unité de commande selon la revendication 8, **caractérisée en ce que** la valeur de réglage concerne le contraste, la luminosité, le niveau d'huile de fixation, des paramètres du papier et/ou la position d'un repère d'impression des unités d'impression, et **en ce que** la position de l'image imprimée que doit former l'unité d'impression est définie en fonction de la position des repères de position sur le matériau du support.

10. Unité de commande selon l'une des revendications précédentes, **caractérisée en ce que** lors d'une modification du niveau de la valeur de réglage de la première unité d'impression, le niveau de la valeur de réglage de la deuxième unité d'impression est modifié de la même manière et **en ce que** lors d'une modification du niveau de la valeur de réglage de la deuxième unité d'impression, le niveau de la valeur de réglage de la première unité d'impression est modifié de manière correspondante.

11. Unité de commande selon la revendication 8, **caractérisée en ce que** la valeur de réglage concerne au moins un paramètre du matériau de support.

12. Unité de commande selon l'une des revendications précédentes, **caractérisée en ce que** la première unité d'impression et la deuxième unité d'impression sont des composants séparés.

13. Unité de commande selon l'une des revendications précédentes, **caractérisée en ce que** la première unité d'impression et la deuxième unité d'impression sont accouplées l'une à l'autre de telle sorte que la première unité d'impression forme une image imprimée sur la face avant du matériau de support et que la deuxième unité d'impression forme une image imprimée sur la face arrière du matériau de support ou la première unité d'impression forme une première image imprimée sur la face avant du matériau de support et la deuxième unité d'impression forme une image imprimée sur la face avant du matériau de support.

14. Unité de commande selon la revendication 13, **caractérisée en ce que** le type et/ou la couleur du matériau d'encrage avec lequel la première unité d'impression forme une image imprimée sont différents du type et/ou de la couleur du matériau d'encrage avec lequel la deuxième unité d'impression forme une image imprimée.

15. Unité de commande selon l'une des revendications 13 ou 14, **caractérisée en ce que** le matériau de support est un matériau de support sans fin.

16. Unité de commande selon l'une des revendications précédentes, **caractérisée en ce que** la surface graphique d'utilisateur (10, 64, 100, 152) contient en outre la représentation graphique de la même valeur de réglage d'une troisième unité d'impression.

17. Unité de commande selon l'une des revendications précédentes, **caractérisée en ce que** la surface graphique de commande contient un élément d'affichage (154, 166) qui signale la présence de données d'impression qui doivent encore être traitées.

18. Unité de commande selon l'une des revendications précédentes, **caractérisée en ce qu'**elle présente un élément d'affichage (60) qui indique au moins un canal d'impression actif de l'imprimante.

19. Unité de commande selon les revendications 17 ou 18, **caractérisée en ce que** l'élément d'affichage est un champ d'affichage coloré et/ou la présentation d'un texte.

20. Unité de commande selon la revendication 19, **caractérisée en ce que** le champ d'affichage contient un symbole graphique.

21. Unité de commande selon les revendications 19 ou 20, **caractérisée en ce que** le champ d'affichage est disposé dans une réglette d'outil (12, 154) de la surface graphique d'utilisateur (10, 64, 100, 152), le champ d'affichage étant coloré dans une première couleur peu contrastée dans un premier état de fonctionnement et coloré en une couleur essentiellement très contrastée par rapport à l'environnement du champ d'affichage dans un deuxième état de fonctionnement.

22. Procédé de commande d'au moins un système électrophotographique d'impression ou de copie selon la revendication 1, dans lequel au moins une valeur de réglage d'un paramètre de l'image imprimée ou de la machine d'impression d'une unité d'impression du système d'impression ou de copie est affichée par une surface graphique d'utilisateur (10, 64, 100, 152) présentant une représentation graphique (74, 64, 100, 152), au moins la valeur de réglage (74, 78, 82, 122) étant introduite par une introduction de l'utilisateur par l'intermédiaire de la surface d'utilisateur (10, 64, 100, 152), des valeurs de réglage utilisées à répétition étant conservées en mémoire dans l'unité de commande, ces valeurs de réglage utilisées à répétition servant de valeurs d'échelle pour diviser une échelle d'un régulateur graphique coulissant (74, 76, 78) ou d'un diagramme circulaire,
l'affichage de la présentation graphique (74, 76, 78, 82, 122) par la surface graphique d'utilisateur (10, 64, 100, 152) de la ou des valeurs de réglage du paramètre de l'image imprimée ou de la machine d'impression concernant une première unité d'impression du système d'impression ou de copie,
une représentation graphique (74, 76, 78, 82, 122) de la même valeur de réglage d'une deuxième unité d'impression du système d'impression ou de copie étant affichée à l'aide de la surface graphique d'utilisateur (10, 64, 100, 152) et
au moins la valeur de réglage (74, 76, 78, 80, 122) de la première unité d'impression est introduite par l'introduction par l'utilisateur par l'intermédiaire de la surface d'utilisateur (10, 64, 100, 152).
